# EUROPEAN PATENT SPECIFICATION

(11) **EP 1 122 125 B1**
(45) Date of publication and mention of the grant of the patent: **09.03.2005**
(21) Application number: 01300759.6
(22) Date of filing: 29.01.2001
(51) Int. Cl.: B60N 3/02

(54) **A motor vehicle and a grab handle assembly therefor**
Ein Kraftfahrzeug und einen Haltegriffeinrichtung für dieses Fahrzeug
Un véhicule à moteur et une disposition de poignée de maintien pour ce véhicule

(30) Priority: 03.02.2000 GB 0002363
(43) Date of publication of application: 08.08.2001
(73) Proprietor: JAGUAR CARS LIMITED, Allesley Coventry CV5 9DR (GB)
(72) Inventor: Grey, Jason John, Stroud, Gloucestershire GL5 1XA (GB)
(74) Representative: Farrow, Robert Michael

(56) References cited:
- DE-A- 4 212 291
- DE-A- 19 731 325
- DE-A- 19 747 703
- DE-A- 19 823 314
- US-A- 5 855 408

## Description

The present invention relates to a motor vehicle and in particular to a grab handle assembly for a motor vehicle.

The use of passenger assist or grab handles is well known in motor vehicles. For example, in a motor car, there may be three grab handles inside the passenger compartment projecting in use generally downwards from the headlining above three passenger doors. Grab handles can restrict the headspace inside the passenger compartment. It is known from US 5,855,408 corresponding to the preamble of claim 1 to provide a grab handle which is hinged to the passenger compartment ceiling, and spring loaded to retract up against the headlining. A passenger may then pull the grab handle down and hold on to this as required. However, it can be difficult to grab hold of such a grab handle when entering a vehicle.

One problem with such retracting hinged grab handles is that there is an inevitable compromise between how flush the grab handle is with the headlining, and how easy it is for a passenger to grab hold of the handle. Although a passenger may have plenty of time to get hold of the grab handle when entering or leaving the passenger compartment, it may be more difficult to pull down the handle quickly when the vehicle is moving, as may be required if the vehicle suddenly corners.

Another grab handle assembly for a motor vehicle which is situated within the passenger compartment is known from DE-A- 198 23 314, wherein the handle support includes a sensor to detect the presence of a passenger on a seat. In addition, DE-A-197 47 703 discloses a grab handle assembly within the passenger compartment of a motor vehicle which can be retracted automatically by means of a sensor when the vehicle doors are closed, in order to avoid a possible interference of the handle with deployment of a head-protecting airbag in a collision situation.

It is an object of the present invention to provide a more convenient grab handle for a motor vehicle.

According to the invention there is provided a motor vehicle having a body structure defining a passenger compartment, at least one grab handle assembly connected to a surface within the compartment, the or each grab handle assembly comprising a handle support connected to the surface and a handle movably connected to the handle support to allow the handle to move between a retracted position in which the handle lies adjacent to the surface and an extended position in which the handle extends away from the surface for use by a passenger of the motor vehicle characterised in that the handle assembly further comprises a proximity sensor to detect the presence of a hand near to the handle and to provide a signal indicative of the presence of a hand to a microprocessor and an actuator to move the handle from said retracted position to said extended position when the proximity sensor senses that a hand is near to the handle.

The actuator may be a spring acting so as to bias the handle towards the extended position, the handle being retained in the retracted position by a retention mechanism controlled by the microprocessor in response to the signal sent from the proximity sensor, the retention mechanism being released when the proximity sensor indicates that a hand is near the handle.

Alternatively, the actuator may be an electrically powered actuator controlled by the microprocessor and arranged to move the handle towards the extended position when the proximity sensor indicates that a hand is near to the handle.

The actuator may be an electrically powered actuator controlled by the microprocessor, and the microprocessor may be arranged to move the handle towards the retracted position when the proximity sensor indicates that a hand is no longer near to the handle.

The assembly may include a spring acting so as to bias the handle towards the retracted position, and the handle may be retained in the extended position by a retention mechanism which is released when the proximity sensor indicates that a hand is no longer near the handle.

Preferably, when the sensor no longer senses that a hand is near to the handle there may be a pre-determined time delay before the handle is moved to the retracted position in which case the time delay may be in the range of 1 to 10 seconds.

Advantageously, if a door adjacent to the handle is open then the time delay does not commence until the door is closed.

Preferably, the actuator may automatically extend the handle to the extended position if a door adjacent to the handle is opened.

The handle may lie flush to the surface when it is in the retracted position.

This has the advantage that the handle is aesthetically more appealing and is also less likely to be hit by the head of a passenger if the vehilce is involved in an accident.

The invention will now be described by way of example, with reference to the accompanying drawings, in which:
Figure 1 is a view of the interior of a motor vehicle passenger compartment showing two passenger side windows each of which has a grab handle according to the invention positioned above a window;
Figure 2 shows a view through a section of the motor vehicle of Figure 1 taken through line 2-2;
Figure 3A is a view of the grab handle according to a first embodiment of the invention;
Figure 3B is a block schematic showing how the grab handle of Figure 3A is controlled;
Figure 3C is a flow-chart showing how the grab handle of Figure 3A operates;
Figure 4A is a view of a grab handle according to a second embodiment of the invention;
Figure 4B is a block schematic showing how the grab handle of Figure 4A is controlled;
Figure 4C is a flow-chart showing how the grab handle of Figure 4A operates;
Figure 5A is a view of a grab handle according to a third embodiment of the invention;
Figure 5B is a block schematic showing how the grab handle of Figure 5A is controlled; and
Figure 5C is a flow-chart showing how the grab handle of Figure 5A operates.

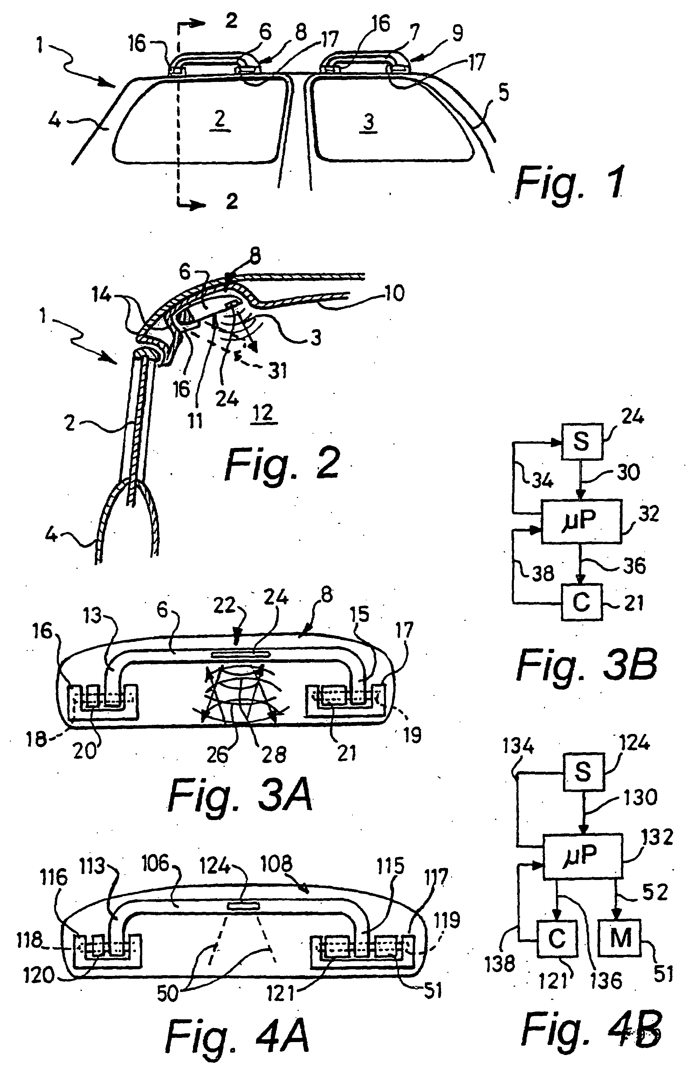

Figures 1 and 2 shows views of a part of a motor vehicle. The motor vehicle 1 has a body structure defining passenger compartment 12, as well as luggage and engine compartments. The motor vehicle or car 1 has two passenger side windows 2,3 set into passenger doors 4,5. Above each window 2,3 is a similar grab handle 6,7. Each grab handle 6,7 is set into a recess 8,9 in a headlining 10 of the passenger compartment 12. A steel box channel 14 forming part of the body structure and running the length of the headlining 10 above the passenger doors 4,5 provides a secure support for each handle 6,7.

Each handle 6,7 has a wide U-shape, and is pivotally attached to the box channel 14 at the ends of each arm 13,15 of the U-shape by a bracket 16,17, shown more clearly in Figure 3A. Each handle 6,7 can therefore rotate 3 out of a retracted position 11 in its recess 8,9 to extend from the headlining 10 downwards and inwards to an extended position 31 in the passenger compartment 12, as shown in phantom outline in Figure 2. The handles 6, 7 and the brackets 16,17 forming part of respective grab handle assemblies.

Referring now to Figures 3A and 3B, the arms 13,15 of each U-shaped handle 6 are pivotally connected to a corresponding U-shaped bracket 16,17 by an axle 18,19. One axle 18 has a coil spring mechanism 20 which spring biases the handle 6 down to the extended position 31. The other axle 19 is connected to a retention mechanism, here an activatable catch 21 that retains the handle 6 in the retracted position 11 and which can be activated to release the axle 19 and hence the handle 6 out of the recess 8 so that it extends into the passenger compartment 12 under the action of the spring 20. The handle 6 has a central portion 22 with an ultrasonic sensor 24 that periodically directs ultrasonic waves 26 into the passenger compartment 12. Any waves that are reflected 28 are sensed by the ultrasonic sensor 24. If the reflected waves 28 have a sufficient intensity, then this is a good indication that a person has his hand (not shown) in proximity to or near to the handle 6.

Figures 3B and 3C show how the handle is arranged to extend automatically when the ultrasonic sensor 24 senses the presence of a hand near the handle 6. The handle 6 operates under the control of a microprocessor 32 which receives from the ultrasonic sensor 24 a signal 30 indicating the strength of any reflected ultrasonic waves 28, and receives from the catch 21 a signal 38 indicating whether or not the catch 21 is engaged or disengaged. The microprocessor 32 has control software that first tests 40 whether or not the catch 21 is engaged. If the catch is not engaged, then this indicates that the handle 6 is extended, and so the software loops back 41 to test again whether or not the catch is engaged 40. If a person has pressed the handle back up into the recess 8, then the catch 21 will become engaged and when the microprocessor 32 detects that this is the case 42, the software waits two seconds 43 before judging 44 from the signal 30 received from the ultrasonic sensor 24 whether or not a hand is sensed in proximity with the handle 6. If a hand is not sensed in proximity, then the software loops back 45 to test again whether or not a hand is sensed in proximity with the ultrasonic sensor 24. When a hand is sensed in proximity 46, then the microprocessor 32 sends a control signal 36 to the catch 21 to release 48 the catch, The handle 6 then extends downwards from the headlining 10 under the action of the coil spring 20. The software then loops back 49 to test 40 whether or not the catch 21 is engaged. When a person no longer needs to use the grab handle 6, then he can press this back up into the recess 8 where it will be automatically secured by the catch 21.

Figures 4A and 4B show the second embodiment of a grab handle 106, where components similar to those in the first embodiment shown in Figures 3A and 3B are indicated by reference numerals incremented by 100. The grab handle 106 has a capacitance sensor 124 which uses an electric field 50 to sense the presence of an object such as a hand near the grab handle 106. The sensor 124 provides an output 130 to a microprocessor 132 indicative of the proximity of an object near the grab handle 106. The microprocessor 132 also controls 134 the operation of the sensor 124. The grab handle 106 is connected by two U-shaped brackets 116,117 via two corresponding axles 118,119. One axle 118 is biased by a coil spring 120 to return the handle 106 upwards into the retracted position 11 (as shown on Fig 2) in the recess 108. The other axle 119 has a catch mechanism 121 that retains the axle 119, and hence the handle 106 in the downwards extended position 31(as shown on Fig 2). The handle 106 is moved from the position in which it is retracted in the recess 108 into the position where it extends downwards and inwards into the passenger compartment 12 by an electric motor 51 on the axle 119. When the microprocessor 132 judges that a hand is in proximity with the grab handle 106, then the microprocessor sends a control signal 52 to the motor 51 to rotate the handle 106 to the extended position 31.

The operation of the grab handle 106 under the control of the microprocessor 132 is shown in Figure 4C. The microprocessor 132 first tests 53 from a signal 138 received from the catch 121 whether or not the catch is engaged. If the catch is not engaged, then this indicates that the handle is retracted in the recess 108, and so software running in the microprocessor 132 loops 54 next to test 55 whether or not a hand is sensed in proximity with the handle 106. Otherwise, if the catch is engaged, the microprocessor 132 tests 56 from the signal 130 received from the capacitance sensor 124 whether or not a hand has been out of proximity from the sensor 124 for more than two seconds. If the hand has been in proximity within the two second period, then the test is performed again 57. Otherwise, if a hand has been out of proximity for more than two seconds 58 then the microprocessor 132 sends a control signal 136 to the catch 121 to release 59 the catch 121 in order to retract the handle 106.

The software then proceeds to test 55 whether or not a hand has been sensed in proximity with the capacitance sensor 124. If no hand has been sensed, then the software loops back 60 to perform this test again. Otherwise, if a hand has been sensed in proximity 61, then the microprocessor 132 sends a control signal 52 to the electric motor 51, in order to drive 62 the motor 51 and hence the handle 106 out of the recess 108 into the extended position 31 where a person may grab the handle 106. The software then loops back 63 to test 56 whether or not a hand has been out of proximity with the sensor 124 for more than two seconds.

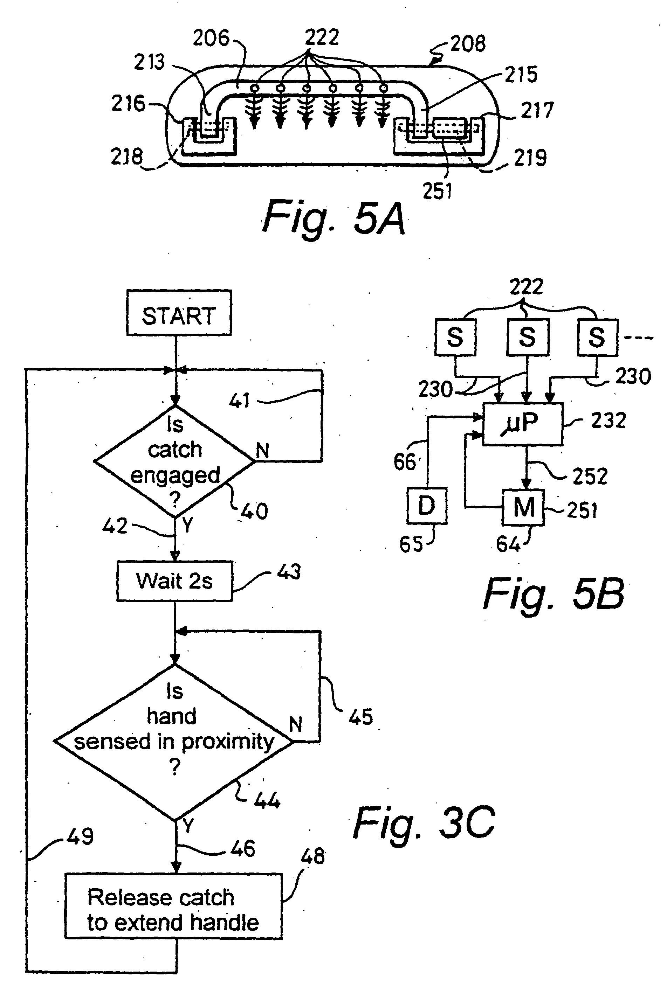

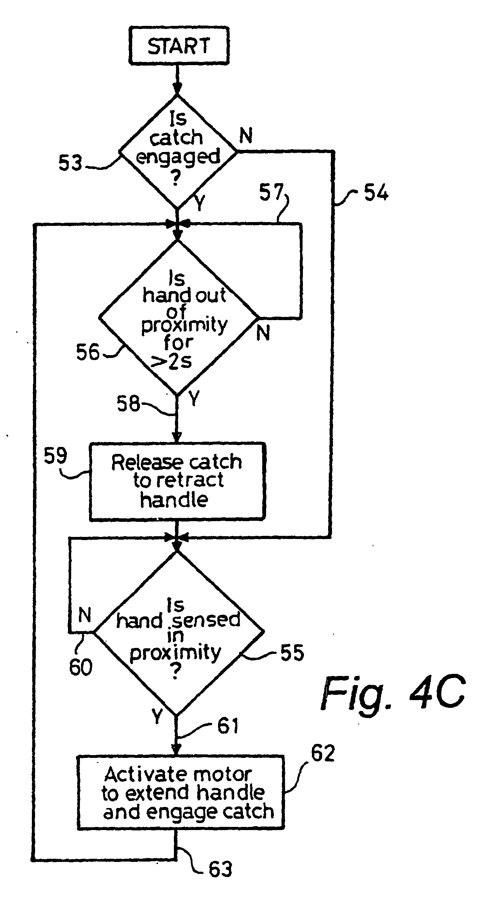

Figures 5A and 5B show a third embodiment of the invention, in which components similar to those in the previous embodiments are indicated by reference numerals incremented by 200. The grab handle 206 has six infrared sensors 222 arranged along the length of the handle. Each infrared sensor 222 contains an infrared transmitter and receiver, with the receiver arranged to detect scattered or reflected infrared light when a hand is in proximity with the handle 206. Each sensor 222 sends an output 230 to a microprocessor 232 indicative of whether or not a hand is in proximity with the grab handle 206. The handle 206 has two arms 213,215, which are connected to respective U-shaped bracket 216,217 via two corresponding axles 218,219. In this embodiment, one axle 218 is free to rotate, while the other axle 219 is driven by an electric motor 251 that also provides an output 64 to the microprocessor 232 that indicates whether or not the motor 251 has driven the axle 219 either to retract the handle 206 into the recess 208, or driven the axle 219 to extend the handle 206 downwards to project into the passenger compartment 12.

The microprocessor 232 also receives from a door sensor 65 a signal 66 that indicates whether or not the door 4 beneath the grab handle 206 is opened or closed.

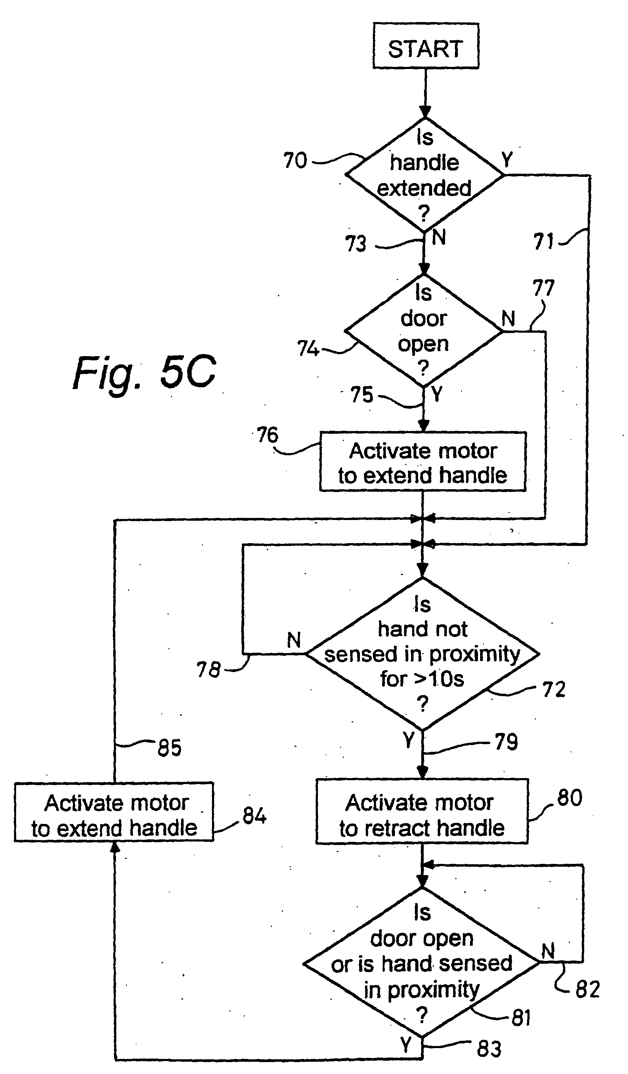

Figure 5C shows how the grab handle 206 operates under the control of software running in the microprocessor 232. The microprocessor 232 first tests 70 from the signal 64 received from the electric motor 251 whether or not the handle 206 is in the extended position 31. If the handle is extended, then the software loops 71 to another test 72 to check if a hand has not been sensed in proximity to any of the sensors 222 for more than ten seconds. Otherwise, if the handle is not extended 73 the software next tests 74 from the signal 66 received from the door sensor 65 whether or not the door 4 is opened or closed. If the door 4 is opened 75 then it is necessary to extend the handle 206 so that a person may use this to help gain access or to leave the vehicle 1. The microprocessor 232 then sends a control signal 252 to the motor 251 to activate 76 the motor in order to extend the handle 206 to the extended position 31 (as shown on Fig.2). Otherwise, if the door 4 is not opened, the software loops 77 to the next step, which is the previously mentioned test 72 as to whether or not a hand has not been sensed in proximity with the handle 206 for more than 10 seconds. If a hand has been sensed in proximity within this time period, then the software loops back 78 to perform this test again. Otherwise, if a hand has been out of proximity for more than ten seconds 79 software running in the microprocessor 232 judges that the handle is no longer needed, and so sends control signal 252 to the motor 251 to activate 80 the motor to retract the handle 206.

If a door adjacent to the handle 206 is sensed to be open then the time delay is postponed until the door 4 is sensed to be closed.

Once the handle 206 is retracted to the retracted position 11(as shown on Fig.2) in the recess 208, the software continues to test 81 if the door 4 has been opened, or if a hand has been sensed in proximity with any of the infrared sensors 222. If the test is negative, then the software loops back 82 to perform this test 81 again, until the test is in the affirmative 83 indicating that the grab handle 206 may be needed by a person. The microprocessor 232 then sends a control signal 252 to the motor 251 to activate 84 the motor to extend the grab handle 206 to the extended position 31. Next, the software loops back 85 to the test 72 mentioned above.

The different embodiments of the invention described above provide various levels of functionality and convenience. The first embodiment shown in Figure 3A is relatively inexpensive to manufacture, as it contains no electric motor, but only an activatable catch 21. This grab handle 6 is automatically extended using energy stored in the coil spring 20 when a person presses the grab handle 6 back into the recess 8.

The second embodiment of the invention shown in Figure 4A uses an electric motor 51 to power the grab handle when this is extended. The retraction of the grab handle 106 is powered by the spring bias force provided by the coil spring 120. This grab handle is therefore fully automatic in both directions of motion.

The third embodiment of the grab handle shown in Figure 5A is also fully automatic and provides an additional degree of convenience by extending automatically when a person may be entering or leaving the passenger compartment 12.

All embodiments of the invention retract fully into the headlining 10 to provide maximum headroom when the grab handle is not needed and to reduce head impact injuries.

The term near to the handle as meant herein means approximately 50 to 100 mm from the handle but is intended to encompass a distance sufficent to allow the handle to move to an extended position before it is required to be used without causing false actuation due to the presense of other body parts such as the head of a seated passenger in the motor vehicle.

The sensing of the proximity sensors can be continuous or may occur at a frequency greater than 2 cycles a second.

## Claims

1. A motor vehicle having a body structure defining a passenger compartment (12), at least one grab handle assembly connected to a surface (10,14) within the compartment(12), the or each grab handle assembly comprising a handle support (16,17,116,117) connected to the surface (10,14) and a handle (6,7,106,206) movably connected to the handle support (16,17,116,117) to allow the handle (6,7,106) to move between a retracted position (11) in which the handle (6,7,106,206) lies adjacent to the surface (10) and an extended position (31) in which the handle (6,7,106,206) extends away from the surface (10) for use by a passenger of the motor vehicle (1) **characterised in that** the handle assembly further comprises a proximity sensor (24,124,222) to detect the presence of a hand near to the handle (6,7,106,206) and to provide a signal indicative of the presence of a hand to a microprocessor (32,132,232) and an actuator (20,51,251)to move the handle (6,7,106) from said retracted position (11) to said extended position (31) when the proximity sensor (24,124,222) senses that a hand is near to the handle (6,7,106,206).

2. A motor vehicle as claimed in Claim 1 in which the actuator (20) is a spring acting so as to bias the handle(6,7) towards the extended position (31), the handle (6,7) being retained in the retracted position (11) by a retention mechanism (21) controlled by the microprocessor (32) in response to the signal sent from the proximity sensor (24), the retention mechanism (21) being released when the proximity sensor (24) indicates that a hand is near the handle (6,7).

3. A motor vehicle as claimed in claim 1 in which the actuator is an electrically powered actuator (50) controlled by the microprocessor (132) and arranged to move the handle (106) towards the extended position (31) when the proximity sensor (124) indicates that a hand is near to the handle (106).

4. A motor vehicle as claimed in Claim 1 or in Claim 3 in which the actuator (251) is an electrically powered actuator controlled by the microprocessor (232), the microprocessor (232) being arranged to move the handle (206) towards the retracted position (11) when the proximity sensor (222) indicates that a hand is no longer near to the handle (206).

5. A motor vehicle as claimed in Claim 3, in which the grab handle assembly includes a spring (120) acting so as to bias the handle (106) towards the retracted position (11), the handle (106) being retained in the extended position(31) by a retention mechanism (121) which is released when the proximity sensor (124) indicates that a hand is no longer near the handle (106).

6. A motor vehicle as claimed in Claim 4 or in Claim 5 in which when the sensor (124,222) no longer senses that a hand is near to the handle(106,206) there is a pre-determined time delay before the handle (106,206) is moved to the retracted position(11).

7. A motor vehicle as claimed in Claim 6 in which the time delay is in the range of 1 to 10 seconds.

8. A motor vehicle as claimed in Claim 6 or Claim 7 in which if a door (4,5) adjacent to the handle (6,7,106,206) is open then the time delay does not commence until the door (4,5) is closed.

9. A motor vehicle as claimed in any preceding claim, in which the actuator (20,51,251) automatically extends the handle (6,7,106,206) to the extended position (31) if a door (4,5) adjacent to the handle(6,7,106,206) is opened.

10. A motor vehicle as claimed in any preceding claim, in which the handle (6,7,106,206) lies flush to the surface (10) within a recess (8,9,108,208) when it is in the retracted position (11).

## Patentansprüche

1. Kraftfahrzeug mit einer einen Passagierraum (12) definierenden Karosseriekonstruktion, wobei mindestens eine Haltegriffeinheit innerhalb des Raums (12) mit einer Oberfläche (10, 14) verbunden ist, wobei die oder jede Haltegriffeinheit eine mit der Oberfläche (10, 14) verbundene Griffabstützung (16, 17, 116, 117) und einen bewegbar mit der Griffabstützung (16, 17, 116, 117) verbundenen Griff (6, 7, 106, 206) umfaßt, um es zu ermöglichen, daß sich der Griff (6, 7, 106) zwischen einer eingefahrenen Position (11), in der der Griff (6, 7, 106, 206) an der Oberfläche (10) anliegt, und einer ausgefahrenen Position (31), in der der Griff (6, 7, 106, 206) von der Oberfläche (10) wegragt, bewegen kann, um von einem Passagier des Kraftfahrzeugs (1) benutzt zu werden, **dadurch gekennzeichnet, daß** die Griffeinheit weiterhin einen Abstandssensor (24, 124, 222), um das Vorhandensein einer Hand in der Nähe des Griffs (6, 7, 106, 206) zu ermitteln und ein Signal, das das Vorhandensein einer Hand angibt, an einen Mikroprozessor (32, 132, 232) zu senden, sowie einen Betätiger (20, 51, 251) umfaßt, um den Griff (6, 7, 106) aus der eingefahrenen Position (11) in die ausgefahrene Position (31) zu bewegen, wenn vom Abstandssensor (24, 124, 222) abgefühlt wird, daß sich eine Hand in der Nähe des Griffs (6, 7, 106, 206) befindet.

2. Kraftfahrzeug nach Anspruch 1, bei dem der Betätiger (20) eine Feder ist, die eine Federvorspannung des Griffs (6, 7) hin zur ausgefahrenen Position (31) bewirkt, wobei der Griff (6, 7) in der eingefahrenen Position (11) von einem Rückhaltemechanismus (21) zurückgehalten wird, der durch den Mikroprozessor (32) in Reaktion auf das vom Abstandssensor (24) gesendete Signal gesteuert wird, wobei der Rückhaltemechanismus (21) freigegeben wird, wenn der Abstandssensor (24) angibt, daß sich eine Hand in der Nähe des Griffs (6, 7) befindet.

3. Kraftfahrzeug nach Anspruch 1, bei dem der Betätiger ein vom Mikroprozessor (132) gesteuerter, elektrisch betriebener Betätiger (50) ist, der vorgesehen ist, um den Griff (106) hin zur ausgefahrenen Position (31) zu bewegen, wenn der Abstandssensor (124) angibt, daß sich eine Hand in der Nähe des Griffs (106) befindet.

4. Kraftfahrzeug nach Anspruch 1 oder Anspruch 3, bei dem der Betätiger (251) ein vom Mikroprozessor (232) gesteuerter, elektrisch betriebener Betätiger ist, wobei der Mikroprozessor (232) vorgesehen ist, um den Griff (206) hin zur eingefahrenen Position (11) zu bewegen, wenn der Abstandssensor (222) angibt, daß sich keine Hand mehr in der Nähe des Griffs (206) befindet.

5. Kraftfahrzeug nach Anspruch 3, bei dem die Haltegriffeinheit eine Feder (120) beinhaltet, die eine Federvorspannung des Griffs (106) hin zur eingefahrenen Position (11) bewirkt, wobei der Griff (106) in der ausgefahrenen Position (31) von einem Rückhaltemechanismus (121) zurückgehalten wird, der freigegeben wird, wenn der Abstandssensor (124) angibt, daß sich keine Hand mehr in der Nähe des Griffs (106) befindet.

6. Kraftfahrzeug nach Anspruch 4 oder Anspruch 5, bei dem, wenn vom Sensor (124, 222) nicht mehr abgefühlt wird, daß sich eine Hand in der Nähe des Griffs (106, 206) befindet, eine vorbestimmte Zeitverzögerung eintritt, bevor der Griff (106, 206) in die eingefahrene Position (11) bewegt wird.

7. Kraftfahrzeug nach Anspruch 6, bei dem die Zeitverzögerung im Bereich von 1 bis 10 Sekunden liegt.

8. Kraftfahrzeug nach Anspruch 6 oder Anspruch 7, bei dem, wenn eine an den Griff (6, 7, 106, 206) angrenzende Tür (4, 5) offen ist, die Zeitverzögerung erst dann beginnt, wenn die Tür (4, 5) geschlossen wird.

9. Kraftfahrzeug nach einem der vorstehend aufgeführten Ansprüche, bei dem der Betätiger (20, 51, 251) den Griff (6, 7, 106, 206) automatisch in die ausgefahrene Position (31) ausfährt, wenn eine an den Griff (6, 7, 106, 206) angrenzende Tür (4, 5) geöffnet wird.

10. Kraftfahrzeug nach einem der vorstehend aufgeführten Ansprüche, bei dem der Griff (6, 7, 106, 206), wenn er sich in der eingefahrenen Position (11) befindet, innerhalb eines Rücksprungs (8, 9, 108, 208) bündig mit der Oberfläche (10) abschließt.

## Revendications

1. Véhicule à moteur comprenant une structure de carrosserie définissant un compartiment passager (12), au moins un ensemble de poignée de maintien connecté à une surface (10, 14) dans le compartiment (12), l'ensemble ou chaque ensemble de poignée de maintien comprenant un support de poignée (16, 17, 116, 117) connecté à la surface (10, 14) et une poignée (6, 7, 106, 206) connectée de façon mobile au support de poignée (16, 17, 116, 117) pour permettre à la poignée (6, 7, 106) de se déplacer entre une position rétractée (11) dans laquelle la poignée (6, 7, 106, 206) est couchée en position adjacente à la surface (10) et une position étendue (31) dans laquelle la poignée (6, 7, 106, 206) s'étend à l'écart de la surface (10) pour permettre l'utilisation par un passager d'un véhicule à moteur (1) **caractérisé en ce que** l'ensemble de poignée comprend en outre un capteur de proximité (24, 124, 222) pour détecter la présence d'une main à proximité de la poignée (6, 7, 106, 206) et pour fournir un signal indicatif de la présence d'une main à un microprocesseur (32, 132, 232) et un actionneur (20, 51, 251) pour déplacer la poignée (6, 7, 106) de ladite position rétractée (11) à ladite position étendue (31) quand le capteur de proximité (24, 124, 222) détecte qu'une main est à proximité de la poignée (6, 7, 106, 206).

2. Véhicule à moteur selon la revendication 1, dans lequel l'actionneur (20) est un ressort agissant de manière à rappeler la poignée (6, 7) vers la position étendue (31), la poignée (6, 7) étant retenue en position rétractée (11) par un mécanisme de rétention (21) commandé par le microprocesseur (32) en réponse au signal envoyé par un capteur de proximité (24), le mécanisme de rétention (21) étant relâché quand le capteur de proximité (24) indique qu'une main est à proximité de la poignée (6, 7).

3. véhicule à moteur selon la revendication 1 dans lequel l'actionneur est un actionneur électrique (50) commandé par le microprocesseur (132) et agencé pour déplacer la poignée (106) vers la position étendue (31) quand le capteur de proximité (124) indique qu'une main est à proximité de la poignée (106).

4. véhicule à moteur selon la revendication 1 ou la revendication 3, dans lequel l'actionneur (251) est un actionneur électrique commandé par le microprocesseur (232), le microprocesseur (232) étant agencé pour déplacer la poignée (206) vers la position rétractée (11) quand le capteur de proximité (222) indique qu'une main n'est plus à proximité de la poignée (206).

5. Véhicule à moteur selon la revendication 3, dans lequel l'ensemble de poignée de maintien comprend un ressort (120) agissant de manière à rappeler la poignée (106) vers la position rétractée (11), la poignée (106) étant retenue en position étendue (31) par un mécanisme de rétention (121) qui est relâché quand le capteur de proximité (124) indique qu'une main n'est plus à proximité de la poignée (106).

6. Véhicule à moteur selon la revendication 4 ou la revendication 5, dans lequel quand le capteur (124, 222) ne détecte plus qu'une main est à proximité de la poignée (106, 206) il y a un délai d'une durée prédéterminée avant que la poignée (106, 206) soit déplacée à la position rétractée (11).

7. Véhicule à moteur selon la revendication 6 dans lequel la durée du délai est dans une fourchette de 1 à 10 secondes.

8. Véhicule à moteur selon la revendication 6 ou la revendication 7 dans lequel si une porte (4, 5) adjacente à la poignée de maintien (6, 7, 106, 206) est ouverte le compte à rebours du délai ne commence pas tant que la porte (4, 5) n'est pas fermée.

9. Véhicule à moteur selon l'une quelconque des revendications précédentes, dans lequel l'actionneur (20, 51, 251) étend automatiquement la poignée (6, 7, 106, 206) à la position étendue (31) si une porte (4, 5) adjacente à la poignée (6, 7, 106, 206) est ouverte.

10. Véhicule à moteur selon l'une quelconque des revendications précédentes, dans lequel la poignée (6, 7, 106, 206) est encastrée au ras de la surface du pavillon (10) dans une découpe (8, 9, 108, 208) quand elle est en position rétractée (11).
